(19) **Europäisches Patentamt / European Patent Office / Office européen des brevets**

(11) **EP 1 703 274 B1**

(12) **EUROPEAN PATENT SPECIFICATION**

(45) Date of publication and mention
of the grant of the patent:
**09.07.2008 Bulletin 2008/28**

(51) Int Cl.:
*G01N 21/952* (2006.01)        *G01N 21/88* (2006.01)
*G01B 11/30* (2006.01)

(21) Application number: **06005501.9**

(22) Date of filing: **17.03.2006**

(54) **Defect inspecting method**

Fehlerüberprüfungsverfahren

Procédé d'inspection de défaut

(84) Designated Contracting States:
**DE FR GB**

(30) Priority: **18.03.2005 JP 2005079595**

(43) Date of publication of application:
**20.09.2006 Bulletin 2006/38**

(73) Proprietor: **Ricoh Company, Ltd.**
**Tokyo 143-8555 (JP)**

(72) Inventors:
• **Ishiura, Tomoaki**
**Tokyo 143-8555 (JP)**
• **Miyazaki, Kunihiko**
**Tokyo 143-8555 (JP)**
• **Ichifuji, Katsumi**
**Techno-frontier Hamamatsu G1**
**Hamamatsu-shi, Shizuoka-ken (JP)**

(74) Representative: **Barz, Peter**
**Patentanwalt**
**Kaiserplatz 2**
**80803 München (DE)**

(56) References cited:
**EP-A- 1 271 134**        **US-A1- 2005 011 929**
**US-B1- 6 646 734**

• **PATENT ABSTRACTS OF JAPAN vol. 2000, no. 23, 10 February 2001 (2001-02-10) & JP 2001 165868 A (SHARP CORP), 22 June 2001 (2001-06-22)**
• **PATENT ABSTRACTS OF JAPAN vol. 2003, no. 12, 5 December 2003 (2003-12-05) & JP 2004 101240 A (MITSUI ENG & SHIPBUILD CO LTD), 2 April 2004 (2004-04-02)**
• **PATENT ABSTRACTS OF JAPAN vol. 1998, no. 04, 31 March 1998 (1998-03-31) & JP 09 325120 A (RICOH CO LTD), 16 December 1997 (1997-12-16)**
• **PATENT ABSTRACTS OF JAPAN vol. 2003, no. 12, 5 December 2003 (2003-12-05) & JP 2004 219119 A (MATSUSHITA ELECTRIC IND CO LTD), 5 August 2004 (2004-08-05)**

**Description**

BACKGROUND OF THE INVENTION

1. Field of the Invention

The present invention relates to a defect inspecting method.

2. Description of the Related Art

In an electrophotographic process used for a copying machine or a laser printer, an electrophotographic photosensitive member is charged to several hundreds of volts or higher by a scorotron charger, and then discharged with laser light or the like to form an electrostatic latent image, after which a toner image is developed with a developing part by way of a developing roller. Next, the toner image is transferred onto a sheet directly or indirectly through a transfer belt. After that, a toner remaining on the electrophotographic photosensitive member is scraped off by a cleaning blade or the like.

As mentioned above, various members comes into contact with each other in the electrophotographic process, surface unevenness of an electrophotographic photosensitive member and peripheral members thereof such as a developing roller and a transfer belt not only affects print quality but also damages a part having the rough surface or damages other parts that come into contact with the part in some cases. Hence, it is important to execute inspection of an uneven defect.

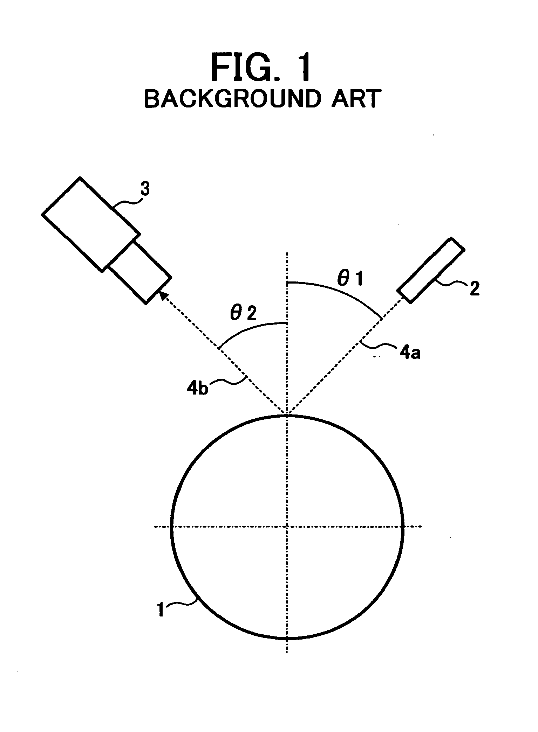

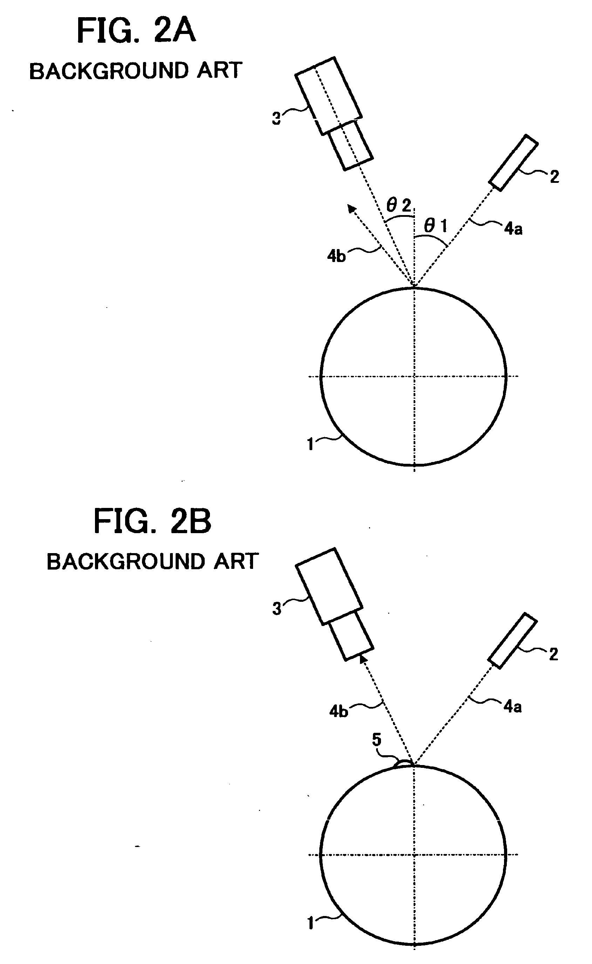

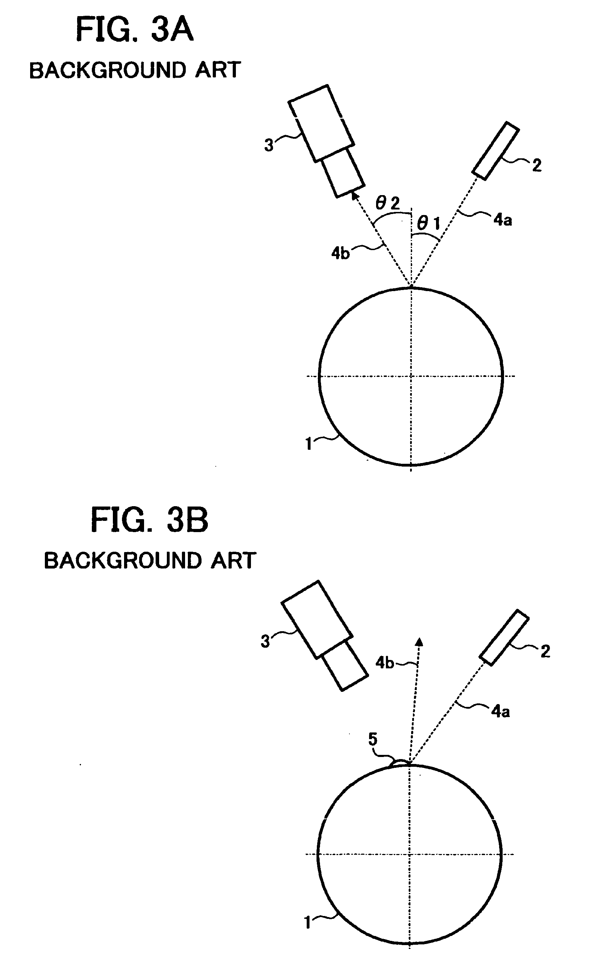

As a known method of inspecting an uneven defect, as shown in Fig. 1, light is applied to the surface of an object to be inspected 1 (electrophotographic photosensitive drum) from a light source 2 placed at the angle θ1 to the normal of the object to be inspected 1, and receiving means 3 placed at the angle θ2 to the normal of the object to be inspected receives the light reflected by the surface of the object to be inspected 1. Then, a defect is inspected through signal processing. There are two types: the light receiving means 3 is placed in such a position as to receive directly reflected light not from a smooth normal surface of the object to be inspected but from an uneven surface (Figs. 2A and 2B); and the light receiving means 3 is placed in such a position as to receive directly reflected light from the smooth normal surface of the object to be inspected, not from the uneven surface thereof (Figs. 3A and 3B). A defect is detected based on the fact that if the surface is rough (uneven defect), the received light is different from that from the normal surface.

The above conventional technique has been devised as disclosed in, for example, Japanese Unexamined Patent Application Publication Nos. 7-128241, 7-128240, and 7-239304.

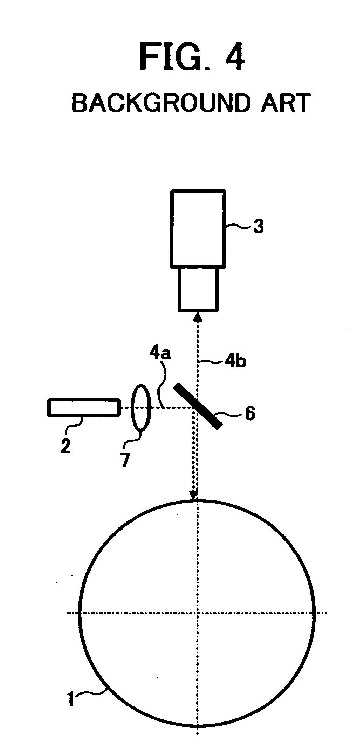

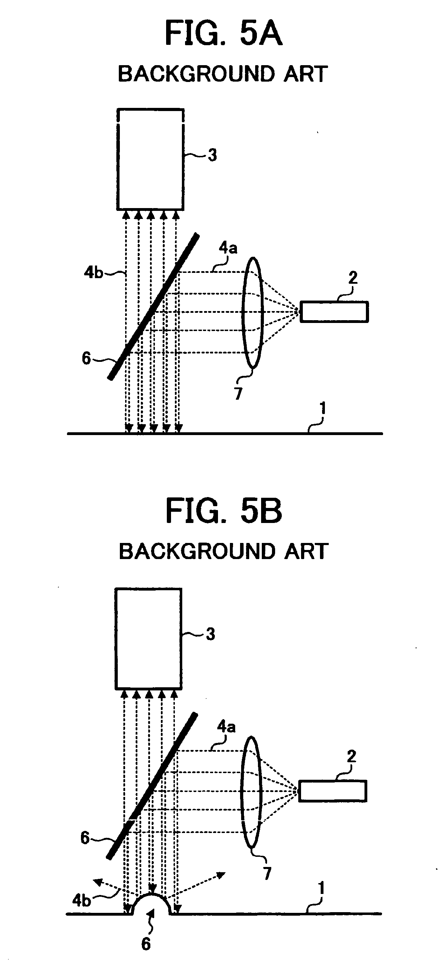

Fig. 4 shows the structure called "coaxial epi-illumination optical system" where θ1 = θ2 = 0° in the illustrated example of Fig. 1. The light source 2 emits light in a direction parallel to the tangent of the object to be inspected, and the light is reflected by a half mirror 6 and applied in the direction of the normal to the object to be inspected 1. As for the smooth normal surface, light is vertically reflected thereby to pass through the half mirror 6 and enter the light receiving means 3 (Figs. 5A and 5B). As for the uneven surface (uneven defect), the light is not vertically reflected by the surface of the object to be inspected 1 and deviates towards parts other than the half mirror 6 and the light receiving means 3, so the defect is detected based on the fact that the received light is different from that from the normal surface. A lens 7 is a collimator lens provided for collimating the light applied to the object to be inspected 1 such that the light reflected by the half mirror 6 is incident on the object to be inspected 1 in a vertical direction.

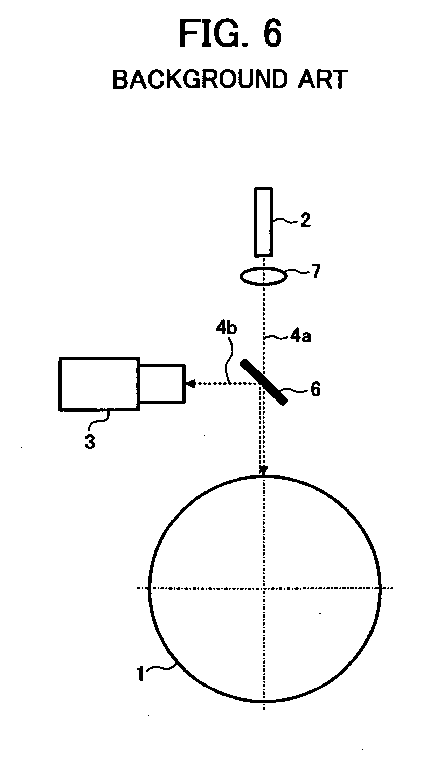

As another structure, as shown in Fig. 6, the light source 2 and the light receiving means 3 are interchanged. Then, the light is emitted from the light source 2 in the direction of the normal to the object to be inspected 1, transmitted through the half mirror 6, and applied to the object to be inspected 1 in the direction of the normal thereof. If the object to be inspected has a smooth normal surface, the light is vertically reflected by the surface, and then reflected by the half mirror 6 to enter the light receiving means 3. If the object to be inspected has an uneven defect, the light is not vertically reflected by the surface of the object to be inspected 1 and thus not incident on the light receiving means, so the defect is detected based on the fact that the received light is different from that from the normal surface. The structures of Figs. 4 and 6 differ from each other only in that the light source 2 and the light receiving means 3 are interchanged, and thus produce similar beneficial effects.

The above conventional technique is disclosed in, for example, Japanese Unexamined Patent Application Publication Nos. 2001-165868, 7-301608, and 2000-111489.

To give another method, there are devised a method of applying light to an object to be inspected to obtain interference fringes and inspecting a defect based on the phenomenon that the interference fringes are distorted due to the defect as disclosed in Japanese Unexamined Patent Application Publication No. 2000-352504, and a method of projecting a pattern to the object to be inspected and inspecting a defect based on the phenomenon that the projected pattern is distorted due to the defect as disclosed in Japanese Unexamined Patent Application Publication No. 7-63687. Further, Japanese Unexamined Patent Application Publication No. 2000-214100 discloses a method of bringing a roller into contact with the surface of the object to be inspected and inspecting an uneven defect based on the phenomenon that the position of the roller is changed if the surface is rough (uneven defect).

However, the methods disclosed in Japanese Unexamined Patent Application Publication Nos. 7-128241, 7-128240, 7-239304, 2001-165868, 7-301608, 2000-111489, 2000-352504, and 7-63687 determine whether or not there is a defect based on whether or not an electrical signal received by the light receiving means exceeds a threshold value for the inspection, or processes a taken image in the case of using photographing means such as a CCD camera as the light receiving means, and compares a size of a defect such as an area or length of a defective portion or a density difference with a threshold value to evaluate the object to be inspected on a pass/fail basis.

Thus, in some cases, an uneven defective part that is large in size but has no difference in height (to be referred to herein also as "depth"), and thus does not affect a printed image from a copying machine or a laser printer is rejected, or an uneven defective part that is small in size but has a difference in height and thus would cause a white patch on a printed image or damage the other parts that come into contact therewith is accepted as a result of the evaluation.

Further, the method disclosed in Japanese Unexamined Patent Application Publication No. 2000-214100 only inspects the height of a projection, so it is difficult to precisely inspect the uneven defect the size (area or length) of which is an important factor.

Even with examiner's visual inspection that has been conventionally adopted, the examiner can judge a defect size to some extent but hardly quantitatively judges a difference in height of a minute defect having a size of less than 0.2 mm. Thus, in some cases, as in the above mechanical inspection method, an uneven defective part that does not affect print quality is rejected, or an uneven defective part that would affect the print quality is accepted as a result of the evaluation.

US 2005/011929 A1 discloses a device comprising optical means having at least one camera and linked to an image acquisition and processing system capable of detecting geometric defects, and further comprising a roughness tester controlled in such a way as to measure the depth of each geometric defect detected by the image acquisition and processing system.

US-B1-6 646 734 describes a method and an arrangement for inspection of a test object for stains or pits at its surface and measuring of any stain or pit. A monitoring device and a scanning device are arranged at an inspection fixture and a control unit for controlling the inspection is included in the arrangement. A stain or pit shown by the monitoring device is subsequently scanned by mean of the scanning device and the depth or width of the stain or pit is calculated, dependent of the results of the scanning device.

Neither US 2005/01129 A1 nor US-B1-6 646 734 discloses a method which uses a difference between focal points of a two-dimensional camera between an image of a defect and an image of a normal position for the calculation of a height (depth) of a defect.

There has not yet been developed an inspecting method that neither excessively inspects defects having a large size but having no difference in height nor fails in inspecting a defect having a small size but having a difference in height.

SUMMARY OF THE INVENTION

Accordingly, it is an object of the present invention to provide a defect inspecting method capable of more surely inspecting a defect of the surface of an object to be inspected.

The invention solves the problem with a defect detecting method according to claim 1.

According to a first aspect, a defect inspecting method for inspecting a defect of a surface of an object to be inspected includes the steps of: applying light from a light source to the surface of the object to be inspected and causing light receiving means to receive light reflected by the surface of the object to be inspected; processing a signal from the light receiving means with a processor to determine a size and a position of the defect of the surface of the object to be inspected; moving a measuring device for measuring a depth of the defect based on the determined position of the defect and measuring the depth of the defect using the measuring device; and comparing the determined size of the defect and the measured depth of the defect with predetermined threshold values.

According to a second aspect, in the defect inspecting method according to the first aspect of the invention, the light receiving means may be provided to receive a directly reflected component of the received light.

According to a third aspect, in the defect inspecting method according to the second aspect of the invention, the sum of an incident angle of the light applied to the surface of the object to be inspected and a reflection angle of the light reflected by the surface of the object to be inspected may be 45° or smaller.

According to a fourth, in the defect inspecting method according to the first aspect of the invention, a half mirror may be used to reflect the light from the light source and transmit the light reflected by the surface of the object to be inspected.

According to a fifth aspect, in the defect inspecting method according to any one of the first to fourth aspects of the invention, the measuring device may include an image pickup optical system, and the step of measuring the depth of the defect may include: picking up an image of the surface of the object to be inspected having the defect with the image pickup optical system; processing the image to determine the defect and a normal portion of the surface of the object to be inspected; and calculating the depth of the defect based on a positional difference of the image picked up by the image pickup optical system between an image of the defect and an image of the normal portion.

According to a sixth aspect, the defect inspecting method according to any one of the first to fifth aspects may further include: determining whether or not a diameter d of a circle having substantially the same area as a sectional area of the defect of the surface of the object to be inspected and a depth h of the defect satisfy an expression: $\tan^{-1}(2h/d) \leq 0.235$ radians.

EFFECTS OF THE EMBODIMENTS

According to a first embodiment mode, a defect inspecting method for inspecting a defect of a surface of an object to be inspected that is a smooth-surface cylindrical shape or columnar shape includes: applying light from a light source to the surface of the object to be inspected and causing a photoelectric conversion sensor as light receiving means to receive light reflected by the surface of the object to be inspected through a lens; processing a signal from the photoelectric conversion sensor with a processor to determine a size and a position of the defect of the surface of the object to be inspected; moving a sensor for measuring a difference in height to the determined position of the defect; and comparing the size and the difference in height of the defect with preset threshold values to evaluate the defect on a pass/fail basis from the comparison results.

According to the first embodiment mode, light is applied from a light source to the surface of the object to be inspected and a photoelectric conversion sensor as light receiving means receives light reflected by the surface of the object to be inspected through a lens. A signal from the photoelectric conversion sensor is processed with a processor to determine a size and a position of the defect of the surface of the object to be inspected. Next, a sensor for measuring a difference in height is moved to the determined position of the defect, and the size and the difference in height of the defect are compared with preset threshold values to evaluate the defect on a pass/fail basis from the comparison results. Hence, it is possible to inspect a defect without excessively inspecting defects having a large size but having no difference in height and failing in inspecting a defect having a small size but having a difference in height.

According to a second embodiment mode as the method of determining a size and a position of the defect of the object to be inspected, in the defect inspecting method according to the first embodiment mode of the invention, the photoelectric conversion sensor as the light receiving means is provided to receive a directly reflected component of the received light.

According to the second embodiment mode as the method of determining a size and a position of the defect of the object to be inspected, the photoelectric conversion sensor as the light receiving means is provided to receive a directly reflected component of the received light, whereby a change in received light amount due to a defect can be surely detected, and an error in a processing of determining the position can be further minimized.

According to a third embodiment mode as the method of determining a size and a position of the defect of the object to be inspected, in the defect inspecting method according to the second embodiment mode, the light source and the photoelectric conversion sensor as the light receiving means are arranged symmetrically with respect to the normal of the object to be inspected, and the angle between the light source and the photoelectric conversion sensor as the light receiving means is 45° or smaller.

According to the third embodiment mode as the method of determining a size and a position of the defect of the object to be inspected, the light source and the photoelectric conversion sensor as the light receiving means are arranged symmetrically with respect to the normal of the object to be inspected, and the angle between the light source and the photoelectric conversion sensor as the light receiving means is 45° or smaller.

According to a fourth embodiment mode as the method of determining a size and a position of the defect of the object to be inspected, in the defect inspecting method according to the first embodiment mode of the invention, a half mirror is used to reflect the light from the light source to apply the light to the object to be inspected in the direction of the normal to the object to be inspected, and transmit the light reflected by the surface of the object to be inspected to cause the photoelectric conversion sensor to receive the light through a lens.

According to the fourth embodiment mode, the half mirror is used to reflect the light from the light source to apply the light to the object to be inspected in the direction of the normal to the object to be inspected, and transmit the light reflected by the surface of the object to be inspected to cause the photoelectric conversion sensor to receive the light through a lens. That is, a coaxial epi-illumination method is used to detect the defect from the direction of the normal and minimizes an error in determining the position of the defect.

According to a fifth embodiment mode as a method of measuring a difference in height of the defect, in the defect inspecting method according to any one of the first to fourth embodiment modes of the invention, the defect and its surroundings are photographed with a two-dimensional camera, and the taken image is processed to determine a defective portion and a normal portion around the defective portion. The focal points of the two-dimensional camera are adjusted to the defective portion and the normal portion to measure the difference in height of the defect based on a positional difference between the focal points.

According to the fifth embodiment mode , the defect and its surroundings are photographed with a two-dimensional camera, and the taken image is processed to determine a defective portion and a normal portion around the defective portion. The focal points of the two-dimensional camera are adjusted to the defective portion and the normal portion to measure the difference in height of the defect, whereby the height of the uneven defect can be measured precisely at high speeds.

According to a sixth embodiment mode, in the defect inspecting method according to any one of the first to fifth embodiment modes of the invention, when a depth h of the defect, and a characteristic value a of the pass/fail evaluation satisfies an expression: $\tan^{-1}(2h/d) \leq 0.235$ radians, the defect is accepted.

According to the sixth embodiment mode, the size and height of the defect are compared with threshold values and evaluated, and in addition, when a depth h of the defect, and a characteristic value a of the pass/fail evaluation satisfies an expression: $\tan^{-1}(2h/d) \leq 0.235$ radians, the defect is accepted. Hence, a determination accuracy can be improved.

First Embodiment

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

Fig. 1 is a schematic diagram of an oblique incidence illumination optical system;
Figs. 2A and 2B demonstrate a method of detecting an uneven surface defect in the oblique incidence illumination optical system;
Figs. 3A and 3B demonstrate a method of detecting an uneven surface defect in the oblique incidence illumination optical system;
Fig. 4 is a schematic diagram of a coaxial epi-illumination optical system;
Figs. 5A and 5B demonstrate a method of detecting an uneven surface defect in the coaxial epi-illumination optical system;
Fig. 6 is a schematic diagram of another coaxial epi-illumination optical system;
Fig. 7 demonstrates a first embodiment ; and
Fig. 8 demonstrates a second embodiment.

DESCRIPTION OF THE PREFERRED EMBODIMENTS

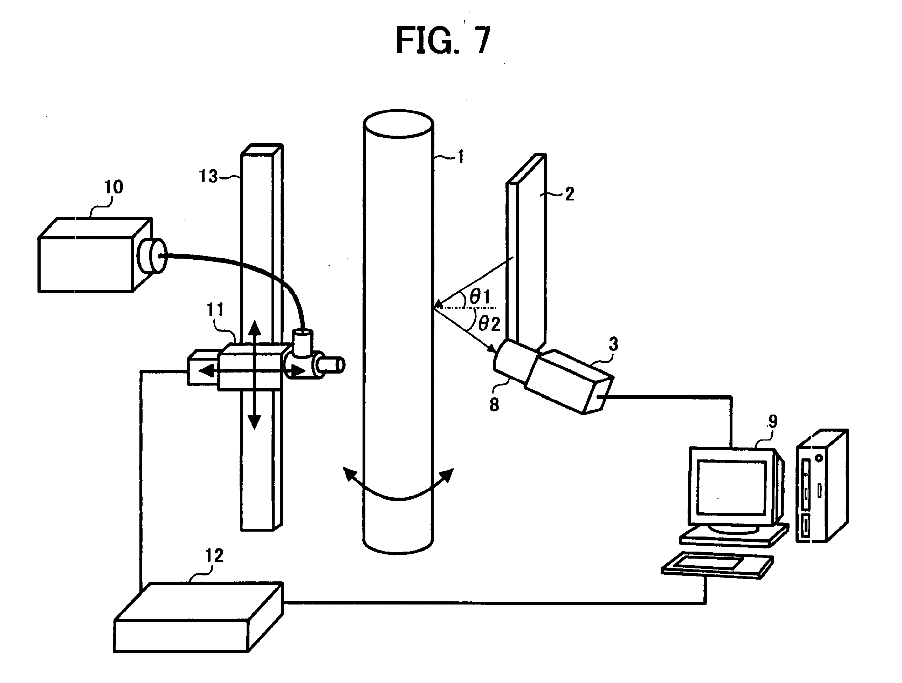

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, in particular to Fig. 7, the first embodiment is described in details.

An object to be inspected 1 (electrophotographic photosensitive drum) is rotatably fixed to a jig rotated by means of a stepping motor (not shown).

A light source 2 that is positioned at the angle θ1 to the normal of the object to be inspected 1 in the circumferential direction of the object to be inspected 1 emits light to the surface of the object to be inspected 1. The light reflected by the surface of the object to be inspected 1 passes through a lens 8 placed at the angle θ2 equivalent to θ1 symmetrically with respect to the normal of the object to be inspected 1. Then, a one-dimensional CCD camera as light receiving means 3 receives light. The light received by the light receiving means 3 is subjected to photoelectric conversion and sent to luminance data to a processor 9. The processor 9 determines a defect size from the luminance data.

As the positions of the light source 2 and the light receiving means 3, if θ1 # θ2, and the drum has an uneven defect as shown in Figs. 2A and 2B, the light receiving means 3 may be provided in such a position as to receive directly reflected light. However, the directly reflected light hardly enters the light receiving means 3 depending on a shape of an uneven defect, or even if the directly reflected light enters the light receiving means 3, the reflection angle of the light at an uneven defective portion varies, and light may enter a portion beyond the edge line of a taken image, which leads to an error in calculating a position of the defect. Hence, it is desirable to set the above parts such that θ1 = θ2.

The angle θ3 (θ1 + θ2) between the light source 2 and the light receiving means 3 is preferably 45° or smaller, more preferably 20° or smaller.

As the angle θ3 increases, illumination light is more likely to enter the object obliquely to the uneven defect. The illumination light is shielded before the uneven defect is moved to the edge line photographed with the light receiving means, with the result that an error easily occurs in determining the position in the circumferential direction of the object to be inspected 1.

An average value of the illumination data of the entire object to be inspected 1 is calculated. A value experimentally calculated is added to the average value to obtain a binary threshold value.

Data taken by a one-dimensional CCD camera as the light receiving means 3 is data having a luminance distribution on one edge line of the object to be inspected 1. The data are arranged to obtain two-dimensional image data.

The image data is binarized with the binary threshold value. That is, if a luminance is lower than the binary threshold value, the data is converted into "0" (black), and if a luminance is higher, the data is converted into "1" (white).

Here, provided that θ1 = θ2, the light receiving means 3 receives the directly reflected light from a normal portion all the time, and receives no directly reflected light from the uneven defective portion, so the uneven defective portion is "0" (black). At this stage, noise components may remain, so image processing such as scaling is desirably executed to delete independent small data of "0" (black) and leave only data of the defective portion.

Then, a given amount of consecutive data of "0" (black) is collectively set to one defect, and the number of data that constitutes the defect is calculated to determine an area of the defect. Here, it is previously determined which percentage one data accounts for in the object to be inspected. Then, a diameter d of the perfect circle corresponding to the defect area is calculated.

A portion of the data of "0" (black) in the binarized image data, that is, circumscribed rectangle of the defective portion is determined, and its barycenter is set to positions X, Y of the defect.

Then, a microscope (with a CCD camera) 11 as a height-measurement photographing part is moved to the uneven defect by an elevating machine 13 based on the calculated positions X, Y to measure a difference in height "h".

A position in the circumferential direction of the object to be inspected 1 is determined such that a position from which the light receiving means 3 starts retrieving data is prestored using pulse data of a stepping motor or the number of pulses of the stepping motor moved from an origin detecting sensor provided to a rotational shaft, and the position is determined based on the previously determined number of image data and the number of pulses of the stepping motor.

The position of the height-measurement photographing part in the axial direction of the object to be inspected 1 is determined based on which percentage one data obtained by the light receiving means 3 accounts for on the object to be inspected 1, and the part is moved to the position.

Here, the height-measurement photographing part is moved, but needless to say, the object to be inspected 1 may be moved.

In Fig. 7, reference numeral 10 denotes the light source; 11, the microscope (with a CCD camera); and 12, a controller for controlling the microscope. As a method of measuring a difference in height of a minute portion, an image of the defect and its surroundings is taken using the microscope to determine a defective portion and a normal portion around the defective portion through image processing as explained in this embodiment, and then focal points are adjusted to the defective portion and the normal portion to calculate a difference in height based on a difference in focal point. In addition, a laser displacement gauge may be used.

However, in the case of using the laser displacement gauge, a measurement range is narrow and it takes much time to scan the uneven defect and its surroundings. Further, in the case of using a sensor that measures displacement based on triangulation, a laser light is shielded by the uneven defect to produce a shaded portion, which causes a measurement error in some cases.

As a method of determining a defective portion and a normal portion using an image taken with the height-measurement photographing part, the microscope (with a CCD camera) 11 is first moved to the uneven defective portion, and focused with the entire field of view being set to a focus area 1 to take an image.

Then, an average value of the obtained image is calculated, and the image data is binarized with the binary threshold value.

Here, the uneven defective portion and the normal portion around the defective portion are set to "0" (black) and "1" (white). As for the coaxial epi-illumination system, the uneven defective portion is "0" (black), and the normal portion is "1" (white).

The entire image is divided into plural segments, and segments composed of only data of "1" (white) are selected, and the photographing part is focused on the segment composed of only data of "1" (white) as the focus area 2 of the normal portion. If the segment composed of only data of "1" (white) is not found, a segment having the largest number of data of "1" (white) is assumed to be a normal portion, or the segments are reclassified to select a segment composed of only data of "1" (white).

Next, the largest one of coupled data of "0" (black) is assumed to be the uneven defect, and the photographing part is focused on the barycenter as a focus area 3. If the uneven defect results from a fibrous contaminant or the like, the barycenter is not on the uneven defect in some cases. In this case, an appropriate position is selected vertically and laterally from the measurement position of the height of the uneven defect. Then, a portion above the data of "0" black is set to fall within the focus area 3.

A difference in focal position between the focus areas 2 and 3 is set to the difference in height "h" of the uneven defect.

The number of data of the defect obtained by the light receiving means 3, that is, the defect area, or the diameter d of the perfect circle corresponding to the defect area and calculated based on the defect area, and the height h of the uneven defect are compared with threshold values and the defect is evaluated on a pass/fail basis. If one of them exceeds a threshold value, the defect is rejected.

In this case, even if one of the diameter d of the perfect circle corresponding to the defect area and the height h of the uneven defect approximates the threshold value, no problem occurs if the other value is not so large. However, if both of the values approximate the threshold - values, the quality may be affected. To that end, the diameter d of the perfect circle corresponding to the defect area, the height h of the uneven defect, and a characteristic value a are represented as the following expression:

$$a = \tan^{-1}(2h/d)$$

The characteristic value a is additionally used in the pass/fail evaluation. Hence, it is possible to detect that the diameter d of the perfect circle corresponding to the defect area and the height h of the uneven defect approximate the threshold values.

A threshold value of the characteristic value a is preferably 0.235 [rad] or larger, more preferably, 0.935 [rad] or larger.

Needless to say, if the diameter d of the perfect circle corresponding to the defect area, and the height h of the uneven defect are sufficiently small, the characteristic value a is not used for the evaluation.

Second Embodiment

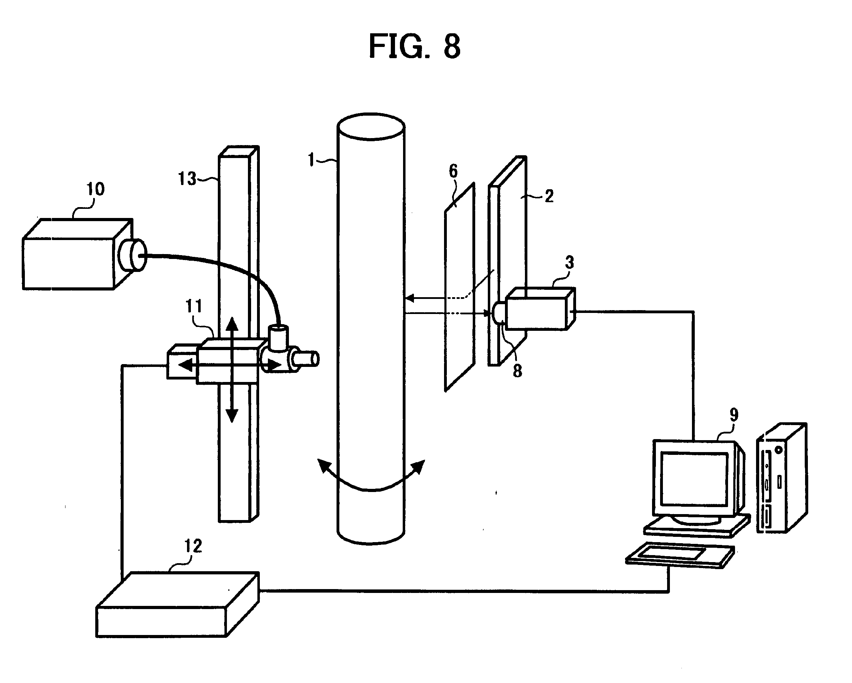

Referring to Fig. 8, a second embodiment is described in details.

The object to be inspected 1 is rotatably fixed to a jig rotated by means of a stepping motor (not shown) similar to the case of Fig. 7.

The light source 2 emits light in parallel to the tangent of the object to be inspected 1 in a position slightly separate in the direction of the normal of the object to be inspected 1 and the light is reflected by the half mirror 6, and applied to the surface of the object to be inspected 1 in the direction of the normal of the object to be inspected 1. The light reflected by the surface of the object to be inspected 1 travels in the direction of the normal of the object to be inspected 1 and passes through the half mirror 6 and the lens 8 to enter the one-dimensional CCD camera as the light receiving means 3. The light received by the light receiving means 3 is subjected to the photoelectric conversion and sent to the processor 9 as the luminance data. The processor 9 determines the size and position of the defect based on the luminance data.

The second embodiment differs from the first embodiment only in terms of the structure of an optical system for obtaining luminance data for calculating the size and position of the uneven defect. The other structure for signal processing and height measurement is the same as that of the first embodiment.

However, in the first embodiment, θ1 > 0° and θ2 > 0°, while in the second embodiment, θ1 = θ2 = 0°. When the uneven defect is on the edge line photographed by the light receiving means 3, an error in calculating a position in the circumferential direction of the object to be inspected is fewer than the first embodiment.

Example 1

In Example 1, the first embodiment is used.

As the object to be inspected 1, an undercoating layer, an electron generating layer, and an electron transport layer were laminated in the order on an aluminum tube having the diameter φ of 60 mm and the length of 360 mm to produce an electrophotographic photosensitive member. 50 accepted members and 50 rejected members were prepared as a result of evaluating an image quality.

The rotational speed of the object to be inspected 1 was set to 0.5 rps.

As the light source 2, a guide made of an optical fiber was attached to a 100 W halogen light source available from MORITEX Corporation so as to illuminate the entire object to be inspected 1.

As the lens 8, Ai Micro Nikkor (55 mm F2.8S) available from Nikon Corporation was used. As the light receiving means, four one-dimensional CCD cameras, Eclipse (2048 pixels) available from DALSA Corporation, were placed in the axial direction of the object to be inspected 1 and the four cameras are used to photograph the entire object to be inspected 1. The angle between the light source and the light receiving means is set to 20°.

As the microscope 11, a two-dimensional CCD camera is integrated with the video microscope unit VMU available from Mitsutoyo Corporation. As the controller 16, a controller AF/σ available from FLOVEL Corporation was used.

As a characteristic value for the pass/fail evaluation, the uneven defect is inspected with the diameter d of the perfect circle corresponding to the uneven defect area and the difference in height h being set to 0.3 mm and 30 $\mu$m, respectively.

The pass/fail evaluation could be executed. The defect having the characteristic value near the threshold value, and influencing an image quality is accepted.

Example 2

The structure of Example 2 is the same as that of Example 1 except that the second embodiment is adopted.

The same result as those of Example 1 is attained.

Example 3

The structure is the same as Example 1 except that the angle between the light source and the light receiving means is 45°.

Substantially the same result as Example 1 is obtained. However, at the time of measuring the difference in height, a defect is outside a central portion of the field of view of the microscope 11, and the defect is partially outside the field of view. As a result, the measurement accuracy of the difference in height h is reduced.

Example 4

The structure is the same as Example 1 except that the angle between the light source and the light receiving means is 60°.

The defect is more likely to be outside the central portion of the field of view of the microscope 11 than Examiner 3, and the measurement accuracy of the difference in height h was further reduced.

Example 5

Example 5 is the same as Example 1 except that as a characteristic value for the pass/fail evaluation, $a = \tan^{-1}(2h/d)$ where h represents the difference in height and d represents the diameter of the perfect circle of the defective portion area, was added, and the characteristic value a was set to 0.235 [rad] or smaller.

The defects accepted in Example 1 and affecting the image quality can be rejected, so more accurate pass/fail evaluation than Example 1 can be executed.

Comparative Example

Comparative Example is the same as Example 1 except that the difference in height of the uneven defect is not measured using the first embodiment, and the size of the defect is only compared with the threshold value for the pass/fail evaluation.

The pass/fail evaluation is executed based on only the defect size, so the uneven defect having a small area but having a difference in height, which results from a needle-like foreign material, is accepted by mistake.

As apparent from the determination result of Examples and Comparative Example of Table 1, according to the present invention, defects can be evaluated with higher accuracy than Comparative Example as the conventional technique.

Determination result of Examples and Comparative Example

Table 1

| | Accepted (Correct) | Rejected (Correct) | Error |
|---|---|---|---|
| | | Unit [drums] | |
| Example 1 | 50 | 47 | 3 |
| Example 2 | 50 | 47 | 3 |
| Example 3 | 50 | 44 | 6 |
| Example 4 | 50 | 40 | 10 |
| Example 5 | 50 | 50 | 0 |
| Comparative Example | 50 | 28 | 22 |

The embodiments and the examples of the present invention are described so far, but the present invention is not limited to these embodiments and examples of the present invention and can be changed or modified without departing from the scope of the invention as defined in the claims.

The present invention is applicable to a method of inspecting an uneven defect of an object to be inspected with a cylindrical or columnar shape. For example, the present invention can be used for the inspection of a photographic photosensitive member, a fixing roller, and an intermediate transfer belt used for an image output device such as a copying machine or a laser printer.

Numerous additional modifications and variations are possible in light of the above teachings. It is therefore to be understood that within the scope of the appended claims, the disclosure of this patent specification may be practiced otherwise than as specifically described herein.

This patent specification is based on Japanese patent application, No. JPAP2005-079595 filed on March 18, 2005 in the Japan Patent Office, the entire contents of which are incorporated by reference herein.

**Claims**

1. A defect inspecting method for inspecting a defect of a surface of an object to be inspected, comprising the steps of:

    applying light from a light source (2) to the surface of the object (1) to be inspected and causing light receiving means (3) to receive light reflected by the surface of the object to be inspected;
    processing a signal from the light receiving means (3) with a processor (9) to determine a size and a position of the defect of the surface of the object to be inspected;
    moving a measuring device (11) for measuring a depth of the defect based on the determined position of the defect and measuring the depth of the defect using the measuring device;
    comparing the determined size of the defect and the measured depth of the defect with predetermined threshold values; **characterized in that**
    the measuring device includes an image pickup optical system, and
    the step of measuring the depth of the defect includes:

    picking up images of the surface of the object to be inspected having the defect and a normal portion with the image pickup optical system; processing the images to determine the defect and a normal portion of the surface of the object to be inspected; and
    calculating the depth of the defect based on a positional difference of the images picked up by the image pickup optical system, wherein the image pickup optical system is a two-dimensional camera and wherein the positional difference is a difference of focal points of the two-dimensional camera
    between said image of the defect and said image of the normal portion.

2. The defect inspecting method according to claim 1, wherein the light receiving means is provided to receive a directly reflected component of the received light.

3. The defect inspecting method according to claim 2, wherein the sum of an incident angle of the light applied to the surface of the object to be inspected and a reflection angle of the light reflected by the surface of the object to be inspected is 45° or smaller.

4. The defect inspecting method according to claim 1, wherein a half mirror is used to reflect the light from the light source and transmit the light reflected by the surface of the object to be inspected.

5. The defect inspecting method according to any one of claims 1 to 4, further comprising:

   determining whether or not a diameter d of a circle having substantially the same area as a sectional area of the defect of the surface of the object to be inspected and a depth h of the defect satisfy an expression:

   $$\tan^{-1}(2h/d) \leq 0.235 \text{ radians.}$$

**Patentansprüche**

1. Fehlerprüfverfahren zum Prüfen eines Fehlers einer Oberfläche eines zu prüfenden Gegenstands, umfassend die Schritte:

   Belichten der Oberfläche des zu prüfenden Gegenstands (1) mit einer Lichtquelle (2) und Bewirken, dass eine Lichtempfangseinrichtung (3) Licht empfängt, das durch die Oberfläche des zu prüfenden Gegenstands reflektiert wird;
   Verarbeiten eines Signals von der Lichtempfangseinrichtung (3) mit einem Prozessor (9), um die Größe und Position des Fehlers der Oberfläche des zu prüfenden Gegenstands zu bestimmen;
   Bewegen einer Messvorrichtung (11) zum Messen der Tiefe des Fehlers auf Basis der bestimmten Position des Fehlers und Messen der Tiefe des Fehlers unter Verwendung der Messvorrichtung;
   Vergleichen der bestimmten Größe des Fehlers und der gemessenen Tiefe des Fehlers mit festgelegten Grenzwerten; **dadurch gekennzeichnet, dass**
   die Messvorrichtung ein optisches Bildaufnahmesystem beinhaltet und
   der Schritt des Messens der Tiefe des Fehlers beinhaltet:

      Aufnehmen von Bildern von der Oberfläche des zu prüfenden Gegenstands mit dem Fehler und einem normalen Bereich mit dem optischen Bildaufnahmesystem;
      Verarbeiten der Bilder, um den Fehler und einen normalen Bereich der Oberfläche des zu prüfenden Gegenstands zu bestimmen; und
      Berechnen der Tiefe des Fehlers auf Basis des Lageunterschieds der Bilder, die durch das optische Bildaufnahmesystem aufgenommen wurden, wobei das optische Bildaufnahmesystem eine zweidimensionale Kamera ist und wobei der Lageunterschied die Differenz von Brennpunkten der zweidimensionalen Kamera zwischen dem Bild des Fehlers und dem Bild des normalen Bereichs ist.

2. Fehlerprüfverfahren nach Anspruch 1, bei dem die Lichtempfangseinrichtung vorgesehen ist, um eine direkt reflektierte Komponente des empfangenen Lichts zu empfangen.

3. Fehlerprüfverfahren nach Anspruch 2, bei dem die Summe des Einfallswinkels des Lichts, das auf die Oberfläche des zu prüfenden Gegenstands eingestrahlt wird, und des Reflexionswinkels des Lichts, das von der Oberfläche des zu prüfenden Gegenstands reflektiert wird, 45° oder kleiner ist.

4. Fehlerprüfverfahren nach Anspruch 1, bei dem ein halbdurchlässiger Spiegel verwendet wird, um das Licht von der Lichtquelle zu reflektieren und das Licht, das durch die Oberfläche des zu prüfenden Gegenstands reflektiert wird, zu übermitteln.

5. Fehlerprüfverfahren nach irgendeinem der Ansprüche 1 bis 4, ferner umfassend:

   Bestimmen, ob ein Durchmesser d eines Kreises mit im wesentlichen der gleichen Fläche wie die Schnittfläche des Fehlers der Oberfläche des zu prüfenden Gegenstandes und die Tiefe h des Fehlers den Ausdruck:

$$\tan^{-1}(2h/d) \leq 0{,}235 \text{ Radiant}$$

erfüllen oder nicht.

**Revendications**

**1.** Procédé d'inspection de défaut destiné à inspecter un défaut d'une surface d'un objet à inspecter, comprenant les étapes consistant à :

appliquer une lumière en provenance d'une source de lumière (2) sur la surface de l'objet (1) à inspecter et amener des moyens de réception de lumière (3) à recevoir la lumière réfléchie par la surface de l'objet à inspecter ;
traiter un signal en provenance des moyens de réception de lumière (3) avec un processeur (9) pour déterminer une taille et une position du défaut de la surface de l'objet à inspecter ;
déplacer un dispositif de mesure (11) destinés à mesurer une profondeur du défaut en fonction de la position déterminée du défaut et mesurer la profondeur du défaut à l'aide du dispositif de mesure ;
comparer la taille déterminée du défaut et la profondeur mesurée du défaut avec des valeurs de seuil prédéterminées ;
**caractérisé en ce que**
le dispositif de mesure comprend un système optique d'analyse d'images, et
l'étape consistant à mesurer la profondeur du défaut comprend les étapes consistant à :

analyser les images de la surface de l'objet à inspecter ayant le défaut et une partie normale avec le système optique d'analyse d'images ;
traiter les images pour déterminer le défaut et une partie normale de la surface de l'objet à inspecter ; et
calculer la profondeur du défaut en fonction d'une différence de position des images analysées par le système optique d'analyse d'images, dans lequel le système optique d'analyse d'images est une caméra bidimensionnelle et dans lequel la différence de position est une différents des points focaux de la caméra bidimensionnelle entre ladite image du défaut et ladite image de la partie normale.

**2.** Procédé d'inspection de défaut selon la revendication 1, dans lequel les moyens de réception de lumière sont prévus pour recevoir un composant réfléchi directement de la lumière reçue.

**3.** Procédé d'inspection de défaut selon la revendication 2, dans lequel la somme d'un angle incident de la lumière appliquée sur la surface de l'objet à inspecter et un angle de réflexion de la lumière réfléchie par la surface de l'objet à inspecter est de 45° ou moins.

**4.** Procédé d'inspection de défaut selon la revendication 1, dans lequel un demi-miroir est utilisé pour réfléchir la lumière provenant de la source de lumière et émettre la lumière réfléchie par la surface de l'objet à inspecter.

**5.** Procédé d'inspection de défaut selon l'une quelconque des revendications 1 à 4, comprenant en outre les étapes consistant à :

déterminer si oui ou non un diamètre d d'un cercle ayant sensiblement la même aire qu'une aire transversale du défaut de la surface de l'objet à inspecter et une profondeur h du défaut satisfont une expression :

```
tan⁻¹ (2h/d) ≤ 0,235 radians.
```

# FIG. 1
## BACKGROUND ART

## FIG. 2A
BACKGROUND ART

## FIG. 2B
BACKGROUND ART

# FIG. 3A
BACKGROUND ART

# FIG. 3B
BACKGROUND ART

# FIG. 4

## BACKGROUND ART

# FIG. 5A

## BACKGROUND ART

# FIG. 5B

## BACKGROUND ART

# FIG. 6
## BACKGROUND ART

# FIG. 7

EP 1 703 274 B1

# FIG. 8

EP 1 703 274 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7128241 A
- JP 7128240 A
- JP 7239304 A
- JP 2001165868 A
- JP 7301608 A
- JP 2000111489 A
- JP 2000352504 A

- JP 7063687 A
- JP 2000214100 A
- US 2005011929 A1
- US 6646734 B1
- US 200501129 A1
- JP P2005079595 A